# EUROPÄISCHE PATENTANMELDUNG

(11) **EP 0 565 022 A1**
(43) Veröffentlichungstag der Anmeldung: **13.10.1993**
(21) Anmeldenummer: 93105599.0
(22) Anmeldetag: 05.04.1993
(51) Int. Cl.: G08B 25/01

(54) **Alarmeinrichtung**

(30) Priorität: 04.04.1992 DE 4211386
(71) Anmelder: Van der Meulen, Alfred, A-5310 Mondsee (AT)
(72) Erfinder: Knab, Gerald, A-5310 Mondsee (AT)

(57) **Zusammenfassung**

Zur Abgabe eines Alarms ist eine Senderschaltung in einem als Fingerring ausgebildeten Gehäuse angeordnet. Die Senderschaltung wirkt mit einer Empfängerschaltung zusammen, die z. B. an ein Telefon angeschlossen ist. An der Volarseite des Fingerrings ist ein Auslöseschalter vorgesehen. Die Senderschaltung ist auf einem flexiblen Folienprint (19) angeordnet, welcher zu einem Ring schließbar ist, der in das Gehäuse (1) des Fingerrings integrierbar ist.

## Beschreibung

Die Erfindung bezieht sich auf eine Einrichtung zur Abgabe eines Alarms gemäß dem Oberbegriff des Anspruchs 1.

Eine derartige Einrichtung ist aus der DE 40 12 074 A1 bekannt.

Bei der bekannten Einrichtung erfordert die Montage der Senderschaltung im Fingerring einen erheblichen Aufwand. Auch kann die Größe des Fingerrings nicht der Größe des Fingers der jeweiligen Person angepaßt werden.

Aufgabe der Erfindung ist es, die bekannte Einrichtung dahingehend zu verbessern, daß die Montage der Senderschaltung im Fingerring wesentlich vereinfacht wird und der Fingerring der Größe des Fingers der jeweiligen Person angepaßt werden kann. Dies wird erfindungsgemäß mit der im Anspruch 1 gekennzeichneten Einrichtung erreicht. In den Unteransprüchen sind vorteilhafte Ausgestaltungen der Erfindung wiedergegeben.

Die erfindungsgemäße Einrichtung besteht aus einem oder mehreren Miniatursendern in Form von Fingerringen mit integriertem Auslöseschalter und aus einer Empfangseinheit, die an einer möglichst empfangssicheren Stelle des Raumes in unauffälliger Weise, beispielsweise in der Decke oder in Beleuchtungskörpern, integriert wird.

Die erfindungsgemäße Einrichtung ist als herkömmlicher Schmuckring getarnt und wird als solcher auch an einem der Tonbandgeräte im Aktenkoffer, Abhöreinrichtungen, Film- und Fotoüberwachung und dgl.

Mit dem Fingerring kann eine Alarmauslösung in jeder beliebigen Position in einem Raum durchgeführt werden. Da der Ring dem Träger pausenlos zur Verfügung steht, ist zu jedem Zeitpunkt unauffällige Alarmauslösung gewährleistet, und zwar mit minimalster Zeitverzögerung und auch bei jeder Stellung der Arme und demnach ohne Risiko in Bezug auf eine nervlich angespannte Situation bei einem Überfall. Dadurch wird auch eine sichere Alarmauslösung mit erhobenen Armen, beispielsweise bei Bedrohung mit Schußwaffen, ermöglicht.

Nachstehend ist die Erfindung anhand der Zeichnung näher erläutert. Darin zeigen:
- Fig. 1: eine perspektivische Ansicht eines Fingerrings in vergrößerter Wiedergabe;
- Fig. 2: eine Ausführungsform der Senderschaltung;
- Fig. 3: eine Ausführungsform der Empfängerschaltung;
- Fig. 4: die Draufsicht auf einen Folienprint;
- Fig. 5: eine Draufsicht auf eine andere Ausführungsform des Folienprints;
- Fig. 6: eine Seitenansicht des Folienprints nach Fig. 5;
- Fig. 7: eine Draufsicht auf einen Abschnitt des Folienprints nach Fig. 4 bis 6;
- Fig. 8: eine Draufsicht auf den Abschnitt des Folienprints mit Induktionsschleifen;
- Fig. 9: eine Draufsicht auf den Abschnitt des Folienprints mit einem Kondensator;
- Fig. 10: eine Seitenansicht des Gehäuses des Fingerrings;
- Fig. 11: eine perspektivische Ansicht des zu einem Ring geschlossenen Folienprints;
- Fig. 12: eine weitere Ausführungsform des Folienprints;
- Fig. 13: die Seitenansicht eines Fingerrings mit Klettbandverschluß;
- Fig. 14: eine perspektivische Ansicht eines Bandes mit einem Verschluß zur Bildung eines Fingerrings;
- Fig. 15: die Seitenansicht des Bandes nach Fig. 14;
- Fig. 16: eine Empfängerschaltung mit Sirene;
- Fig. 17: eine Ladestation zum Aufladen des Akkumulators in dem Fingerring;
- Fig. 18: eine an das Telefonnetz anschließbare Informationszentrale;
- Fig. 19: das Tastenfeld der Informationszentrale nach Fig. 18;
- Fig. 20: ein Blockschaltbild der Informationszentrale.

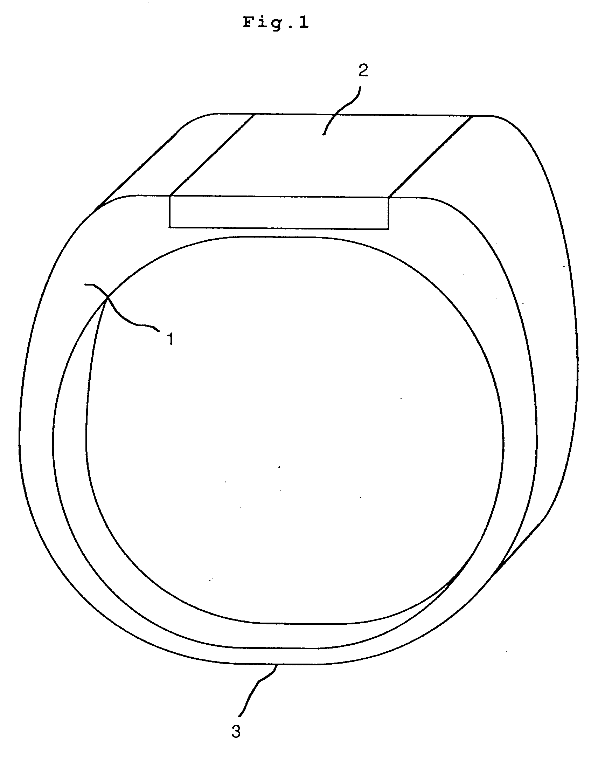

Gemäß Fig. 1 weist ein Fingerring in einem Gehäuse 1, das die Senderschaltung der erfindungsgemäßen Einrichtung enthält, an der Dorsalseite eine Schmuckstein 2 und an der Volarseite einen in Fig. 1 nicht sichtbaren, in das Gehäuse 1 integrierten Auslöseschalter 3 auf.

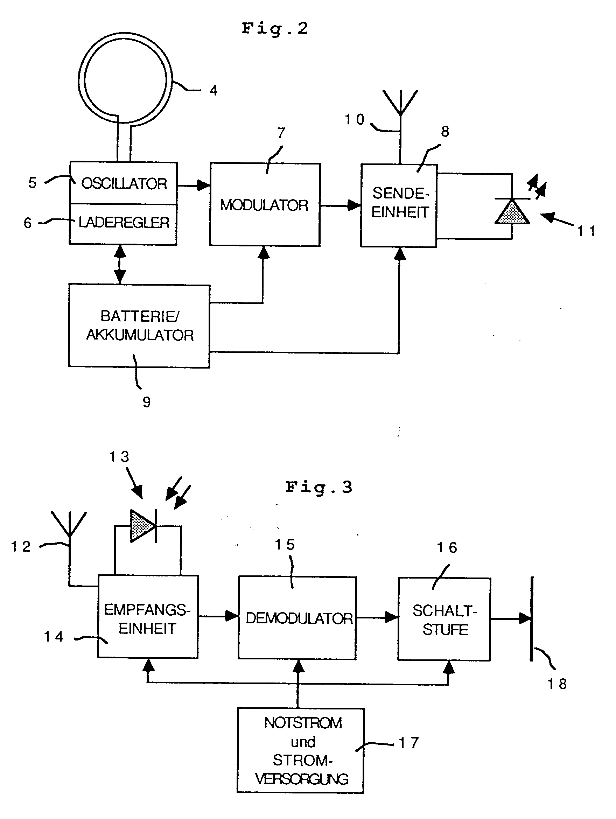

Die in dem Gehäuse 1 untergebrachte Senderschaltung besteht gemäß Fig. 2 im wesentlichen aus einem Oszillator 5 mit einem Schwingkreis 4. Der Oszillator 5 ist einerseits mit einem Laderegler 6 und andererseits über einen Modulator 7 mit einer Sendeeinheit 8 verbunden. Eine Stromversorgungseinrichtung 9 in Form einer Batterie oder eines Akkumulators versorgt den Laderegler 6, den Modulator 7 und die Sendeeinheit 8 mit Strom. Die Sendeeinheit 8 kann mit einer Sendeantenne 10 und/oder einer Infrarot-Sendediode 11 versehen sein.

Die Sendeeinheit 8 erzeugt ein Trägersignal, welches mit dem vom Modulator 7 erzeugten Alarmsignal in Puls-Code-Modulation über die Infrarot-Sendediode 11 oder die Sendeantenne 10 mit äußerst hoher Leistung in den Raum abgestrahlt wird.

Die Empfängerschaltung besteht gemäß Fig. 3 im wesentlichen aus einer Empfangsantenne 12 und/oder einer Infrarot-Empfangsdiode 13, der Empfangseinheit 14, dem Demodulator 15, der Schaltstufe 16 und der Stromversorgung 17. Das von der Sendeantenne 10 bzw. Sendediode 11 gesendete, modulierte Signal wird von der Empfangsantenne 12 bzw. der Empfangsdiode 13 empfangen, in der Empfangseinheit 14 in ein entsprechendes elektrisches Signal umgewandelt und an den Demodulator 15 weitergeleitet. Im Demodulator 15 wird das Signal demoduliert, um das ursprüngliche Alarmsignal zu erhalten. In der Schaltstufe 16 wird das Alarmsignal auf die richtige Pulsfolge hin überprüft, um bei Korrektheit ein Schaltsignal an eine Notrufstelle zu übertragen, die an der Schnittstelle 18 angeschlossen ist, wodurch der Alarm ausgelöst wird.

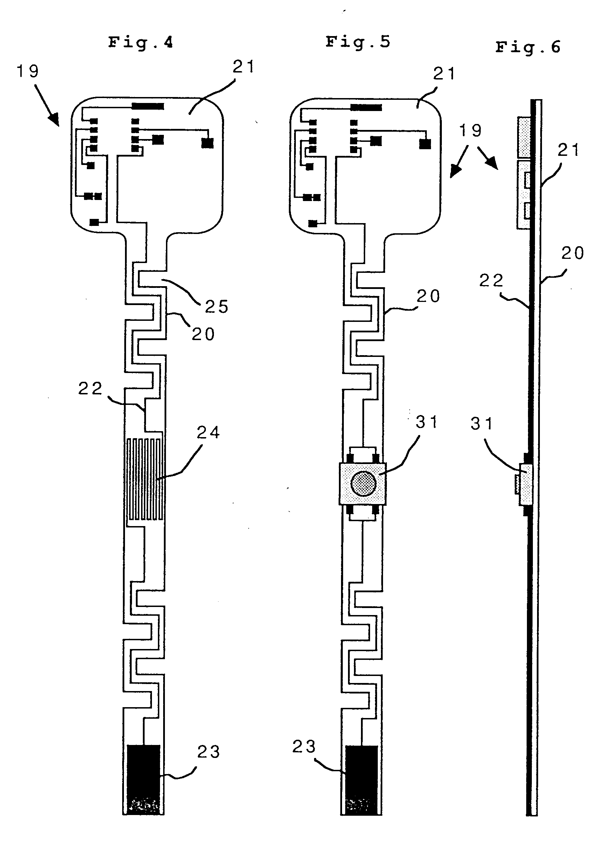

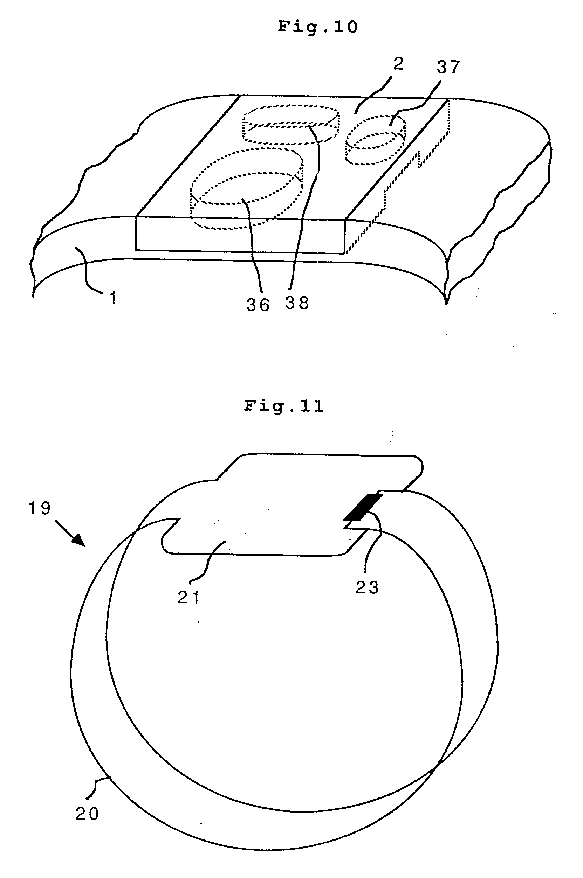

Die Senderschaltung, die in das Ringgehäuse 1 von außen nicht sichtbar integriert ist, ist auf einem flexiblen Folienprint 19 vorgesehen, der in Fig. 4 bis 9 dargestellt ist und der, wie in Fig. 11 gezeigt, zu einem Ring geschlossen werden kann.

Der Folienprint 19 besteht aus einem streifenförmigen Abschnitt 20, an den sich ein breiterer, rechteckiger Abschnitt 21 anschließt. Gemäß Fig. 4 ist auf dem streifenförmigen Abschnitt 20 eine Leiterbahn 22 vorgesehen, die vom rechteckigen Abschnitt 21 zu einer flächigen Metallfläche als Ablängende 23 am anderen Ende des streifenförmigen Abschnitts 20 führt.

Etwa in der Mitte des streifenförmigen Abschnitts 20 ist die Leiterbahn unter Bildung eines induktiven Näherungsschalters als Auslöseschalter in Form mäanderförmiger Induktionsschleifen 24 ausgebildet, die zusammen mit einem Kondensator einen Schwingkreis bilden.

Der streifenförmige Abschnitt 20 ist beiderseits der Mitte mit den Induktionsschleifen 24 durch Ausnehmungen 25 mäanderförmig ausgebildet. Auch die Leiterbahn 22 weist in diesem Bereich eine entsprechende Mäanderform auf. Auf diese Weise kann die Dehnbarkeit des streifenförmigen Abschnitts 20 erhöht werden.

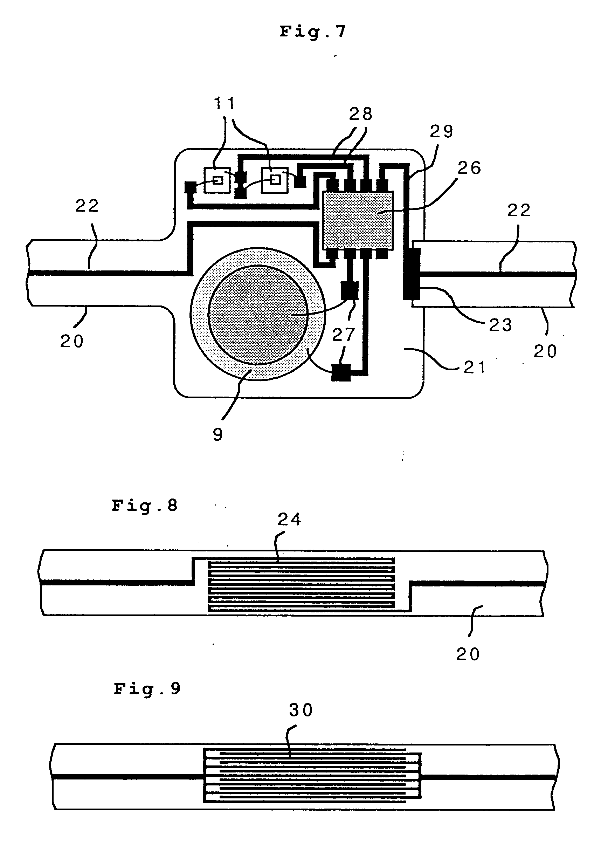

Gemäß Fig. 7 ist der breite, rechteckige Abschnitt 21 des Folienprints 19 mit sämtlichen Bauelementen der Senderschaltung bestückt, d. h. mit einem Chip 26, der beispielsweise aus zwei Infrarot-Dioden bestehenden Sendediode 11 und der durch eine Batterie oder einen Akkumulator gebildeten Stromversorgungseinrichtung 9. In dem Chip 26 befinden sich der Modulator 7 und die Sendeinheit 8. Von der Stromversorgungseinrichtung 9 und von der Sendediode 11 führen entsprechende Leiterbahnen 27, 28 zum Chip 26. Ferner ist der Chip 26 an die Leiterbahn 22 angeschlossen und an eine weitere Leiterbahn 29, die zu der Seite des Abschnitts 21 führt, der der Seite gegenüberliegt, an die sich der streifenförmige Abschnitt 20 anschließt. An die Leiterbahn 29 ist die Metallkontaktfläche 23 an dem Ablängende des streifenförmigen Abschnitts 20 angeschlossen, wenn der Folienprint 19 gemäß Fig. 11 zu einem Ring geschlossen ist.

Der in Fig. 4 und 8 dargestellte induktive Näherungsschalter 24, der im Fingerringgehäuse 1 an der Volarseite angeordnet ist, spricht an, wenn mit dem Daumen die Koppelkapazität der Induktivität einige Sekunden gedämpft wird. Gemäß Fig. 9 kann der Auslöseschalter auch als kapazitiver Sensor ausgebildet sein. Dazu ist die Leiterbahn 22 mit ineinandergreifenden Enden zu einem Kondensator 30 ausgebildet. Durch Betätigung mit dem Daumen wird die Kapazität des Kondensators 30 durch Änderung der Dielektrizitätskonstante und damit die Frequenz des Schwingkreises 4 geändert.

Gemäß Fig. 5 und 6 kann anstelle eines induktiven bzw. kapazitiven Sensors auch eine mechanische Mikrotaste 31 als Auslöseschalter an der Volarseite des Fingerrings 1 vorgesehen sein. Wie erwähnt, sind in dem integrierten Schaltkreis auf dem Folienprint sämtliche Bauelemente und Baugruppen in dem Chip 26 zusammengefaßt. Weiterhin befinden sich auf der Bestückungsfläche 21 als Sendediode 11 zwei Infrarot-Dioden, um eine möglichst hohe abgestrahlte Leistung zu erhalten. Statt der Sendediode 11 kann auch eine Hochfrequenzspule oder eine Sendeantenne 10 vorgesehen sein, welche bei Alarmauslösung ein Hochfrequenzsignal aussendet. Dieses Hochfrequenzssignal besitzt in einem nahen Bereich eine hohe Feldstärke, um beispielsweise eine Handtaschensirene einzuschalten.

Der Schwingkreis 4 der Senderschaltung (Fig. 2) wird durch die Leiterbahn 22 im streifenförmigen Abschnitt 20 des Folienprints 19 gebildet. Wenn die Stromversorgungseinrichtung 9 durch einen Akkumulator gebildet wird, kann der Schwingkreis 4 zugleich zum Aufladen des Akkumulators verwendet werden.

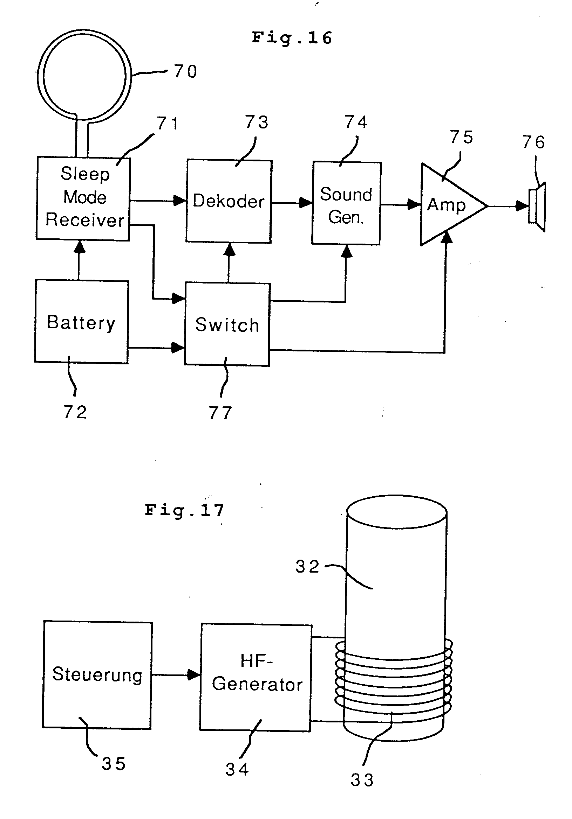

Dazu ist eine externe Energiequelle vorgesehen, die in Fig. 17 dargestellt ist. Die Energiequelle besteht aus einem Ferrit-Stab 32 mit einer Induktionsspule 33, die an einen Hochfrequenzgenerator 34 angeschlossen ist, der von einer Steuereinrichtung 35 gesteuert wird.

Im Lademodus wird der Schwingkreis 4 durch einfaches Aufstecken des Fingerrings 1 auf den Ferrit-Stab 32 mit der von dem Hochfrequenzgenerator 34 erzeugten Hochfrequenzschwingung in Schwingung versetzt, wodurch der Akkumulator wieder aufgeladen wird.

Das Gehäuse 1 des Fingerrings wird vorzugsweise durch ein Kunststoff-Gießverfahren hergestellt, wobei der Folienprint 19 mitsamt den Bauelementen (Stromversorgungseinrichtung 9, Sendediode 11 und Chip 26) in die Gießform eingelegt wird und in einem Arbeitsgang in der Gießform vergossen wird. Die Gießform ist an der der Dorsalseite des Rings 1 entsprechenden Seite mit einer Aussparung versehen, um eine entsprechende Aussparung im Fingerring an der Dorsalseite zu erzeugen.

Gemäß Fig. 10 ist in diese Aussparung an der Dorsalseite des Fingerringgehäuses 1 eine als Schmuckstein 2 ausgebildete Infrarot-Blende eingesetzt. Der "Schmuckstein" 2 ist an seiner Innenseite mit entsprechenden Aussparungen 36 bis 38 für die Baugruppen, also die Stromversorgungseinrichtung 9, die Sendediode 11 und den Chip 26, auf dem rechteckigen Abschnitt 21 des Folienprints 19 versehen. Durch die Verwendung des als Infrarot-Blende ausgebildeten Schmucksteins 2 wird ein großer Abstrahlwinkel erreicht.

Um die Möglichkeit einer variablen Ringgröße vorzusehen, wird der Kunststoff, aus dem das Fingerringgehäuse 1 hergestellt ist, so gewählt, daß der Fingerring 1 plastisch verformbar ist, wodurch das Fingerringgehäuse 1 mitsamt dem Folienprint 19 durch Dehnung an die jeweilige Fingergröße angepaßt werden kann. Ein thermoplastischer Kunststoff wird bevorzugt. Es kann sich jedoch auch um einen kaltverformbaren Kunststoff handeln. Durch die in Fig. 4 dargestellte mäanderförmige Ausführung des Folienprints beiderseits der Induktionsschleifen 24 kann der Folienprint 19 gedehnt werden, ohne die Leiterbahn 22 zu beschädigen.

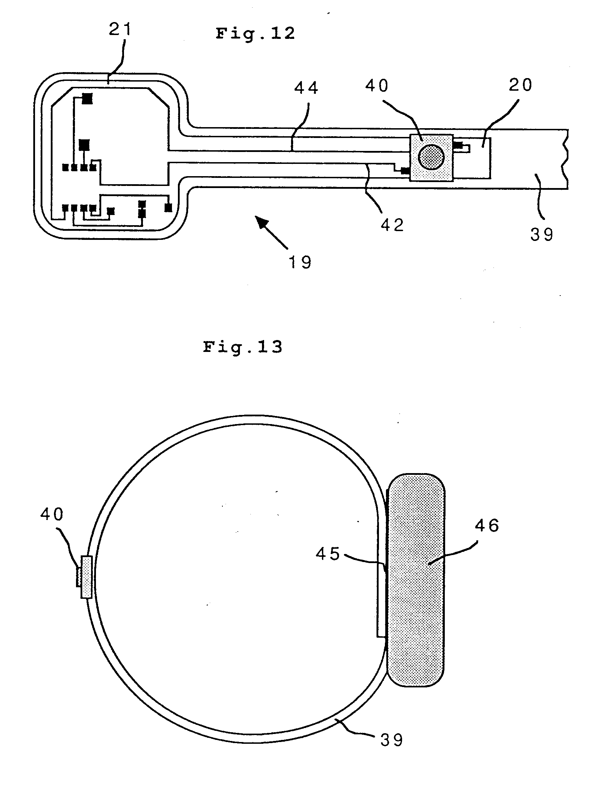

Um den Ring der Größe des jeweiligen Fingers anzupassen, kann er gemäß Fig. 12 und 13 auch als Klettband 39 ausgebildet sein. Dazu wird der in Fig. 12 dargestellte Folienprint 19 z. B. mit einer Mikrotaste 40 versehen. Dabei wird die Leiterbahn 42, die an die Mikrotaste 40 angeschlossen ist, durch eine entsprechende Leiterbahn 43, 44 von der Mikrotaste 40 zu dem rechteckigen Abschnitt 21 des Folienprints 19 wieder zurückgeführt. D. h., im Gegensatz zur Ausführungsform nach Fig. 4 und 5 führen bei der Ausführungsform nach Fig. 12 die Leiterbahnen 21, 22 nicht zum freien Ende des streifenförmigen Abschnitts 20. Dies ist durch den Klettverschluß 45 bedingt. Bei der Ausführungsform des Rings nach Fig. 13 sind die Bauelemente auf der rechteckigen Bestückungsfläche 21 des Folienprints 19 so ausgeführt und gestaltet, daß die Infrarot-Blende bzw. ein als Schmuckstein getarntes Gehäuse 46 aufgesetzt werden kann. Der gesamte Folienprint 19 gemäß Fig. 12 ist in dem Klettband 39 z. B. durch Einnähen untergebracht. Das Klettband 39 kann so einfach um den Finger gewickelt und der Klettverschluß 45 angedrückt werden.

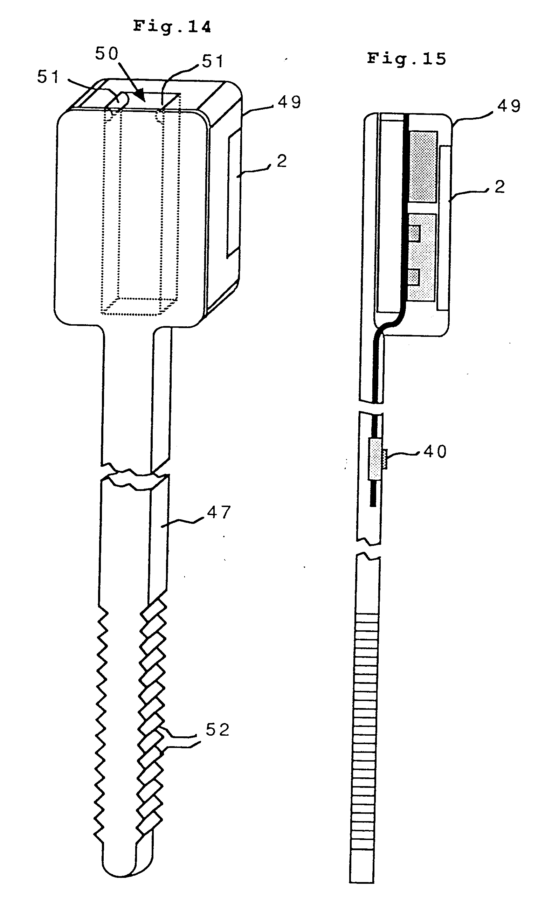

Gemäß Fig. 14 und 15 ist das Fingerringgehäuse als flexibles Kunststoffband 47 mit einem Verschluß ausgebildet. In dem Kunststoffband 47 wird der Folienprint 19 vergossen, so daß die Mikrotaste 40 von außen zugänglich bleibt. Auf das Kunststoffband 47 mit dem eingegossenen Folienprint 19 wird im Bereich des rechteckigen Abschnitts 21 des Folienprints 19 ein Gehäuse 49 aufgesetzt. Das Gehäuse 49 weist eine Ausnehmung 50 mit je einer federnden Rippe 51 an beiden Seiten auf, in welche das mit Zähnen 52 versehene Ende des Kunststoffbandes 47 gesteckt wird, wobei die federnden Rippen 51 zwischen den Zähnen 52 einrasten, um den Fingerring zu schließen. In das Gehäuse 49 kann eine beispielsweise als Schmuckstein 2 ausgebildete Infrarot-Blende eingesetzt sein.

Die Empfängerschaltung kann mit einer Handtaschensirene oder einer an das Telefonnetz angeschlossenen Informationszentrale verbunden sein.

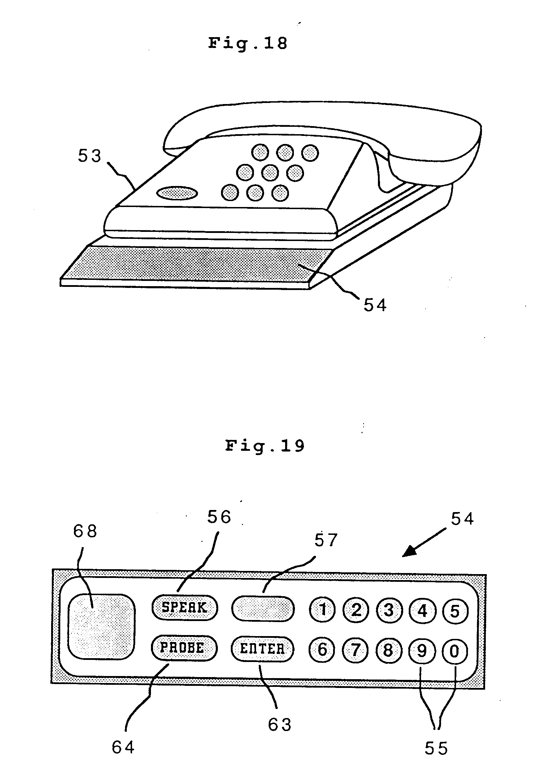

Die Informationszentrale ist in Fig. 18 dargestellt. Sie besteht aus einem Telefonapparat 53 mit einer Selbstwähleinrichtung und besitzt einen Speicher zur Aufnahme von Telefonnummern sowie zur Aufnahme des Sprach- bzw. eines Notruftextes, welcher der Notrufstelle, dem Arzt oder dgl. Personen mitgeteilt werden soll. Dabei kann der Anwender mittels eingebautem Mikrofon Texte auf das Aufnahmegerät aufsprechen, welche digitalisiert und in einem Speicher abgelegt werden. Das Tastaturfeld 54 der Informationszentrale ist in Fig. 19 dargestellt. Die gewünschten Telefonnummern können mittels einer Zahlentastatur 55 eingespeichert werden. Zur Aufnahme des Alarmtextes wird die Taste 56 "SPEAK" gedrückt und anschließend ein Text nach Wahl mittels eingebautem Mikrofon 57 auf das Aufnahmegerät gesprochen.

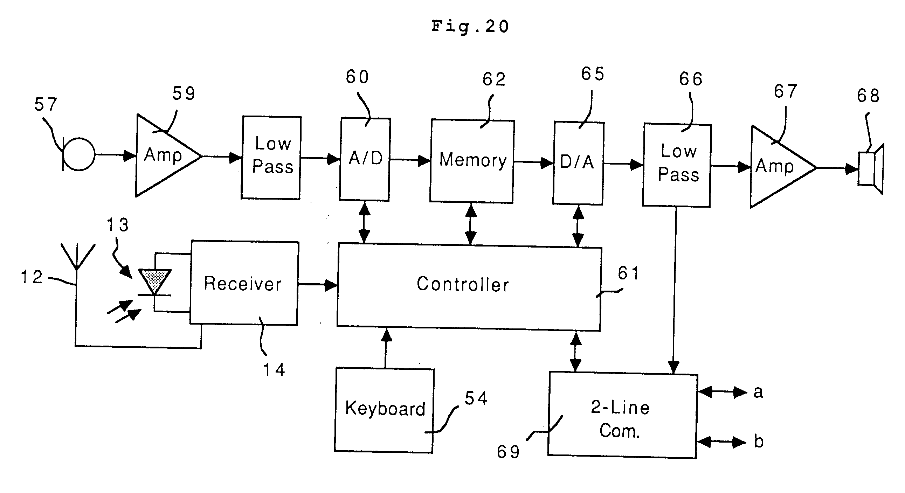

Gemäß Fig. 20 ist das Mikrofon 57 mit einem Verstärker 58 zur Signalverstärkung verbunden, und ein dem Verstärker 58 nachgeschaltetes Tiefpaßfilter 59 siebt unerwünschte Störfrequenzen aus dem Signalweg und gibt das Signal zur Digitalisierung an den Analog/Digital-Wandler 60. Eine Steuerung mittels der Mikrosteuereinheit 61 gibt den Wandlertakt vor und sorgt für den zeitlichen Ablauf der Datenablage in dem Speicher 62.

Ein reservierter Bereich im Speicher 62 ist vorgesehen, um Telefonnummern abzuspeichern. Nach Drücken der Eingabetaste 63 "ENTER" können anschließend die Telefonnummern eingegeben werden, welche von der Steuerung in dem Speicher 62 abgelegt werden.

Um eine Kontrolle des aufgesprochenen Textes zu ermöglichen, ist eine Taste 64 "PROBE" vorgesehen, wodurch der Sprachtext im Speicher 62 aufgerufen und mittels Analog/Digital-Wandler 65 in das ursprüngliche Signal des Alarmtextes umgesetzt wird. Das nachgeschaltete Tiefpaßfilter 66 unterdrückt den im Analog/Digital-Wandler 65 entstehenden Oberwellenanteil aus dem Signal, welcher durch die Abtastfrequenz hervorgerufen wird.

Durch einen Audio-Verstärker 67 und einen angeschlossenen Lautsprecher 68 wird das Signal hörbar und kann damit kontrolliert werden. Es ist vorgesehen, durch die Betätigung der Taste 56 "SPEAK" einen neuen Text in den Speicher 62 abzulegen, wodurch der bereits gespeicherte Text gelöscht bzw. neu überschrieben werden kann.

Wird ein Alarm durch Betätigung des Auslöseschalters 3 des Fingerrings 1 ausgelöst, so übersendet die Senderschaltung im Fingerring 1 je nach Ausführung ein Infrarot- oder Hochfrequenz-Alarmsignal. Das Alarmsignal wird gemäß Fig. 20 von der Empfangsantenne 12 bzw. der Empfangsdiode 13 empfangen und von der Empfangseinheit 14 ausgewertet. Durch die Kontroll- oder Steuereinrichtung 61 wird die Telefonnummer aus dem Speicher 62 abgefragt. Die Steuereinheit 61 enthält ein Wählprogramm mit Bestätigungsabfrage (Sprachbestätigung von der Gegenstelle, z. B. Arzt) und bei Besetztzeichen des Telefons eine Wahlwiederholfunktion.

Wird die Nummernwahl von der Gegenseite bestätigt, so veranlaßt die Steuereinheit 61 die Ausgabe des Alarmtextes aus dem Speicher 62 mit anschließender Analog/Digital-Wandlung und Filterung.

Die Sprachübermittlung an die Zweidraht-Kommunikationsschnittstelle 69 für das Telefonnetz wird solange wiederholt, bis die Gegenstelle den Hörer auflegt. Die Kommunikationsschnittstelle a, b sorgt für die bidirektionale Anpassung an das Telefonnetz.

Zur Betätigung einer Handtaschensirene dient die in Fig. 16 dargestellte Schaltung. Danach wird durch Betätigung des Auslöseschalters 3 des Fingerrings 1 ein Hochfrequenzalarmsignal in einem nahen Bereich des Fingerrings 1 ausgestrahlt. Das Signal wird mit einer Empfangsantenne 70 empfangen. Ein im "SLEEP-Mode" (Schlaf-Modus mit sehr geringer Stromaufnahme zur Batterieschonung) befindlicher selektiver Empfänger 71 wird dadurch aktiviert und eingeschaltet. Gleichzeitig schaltet der Empfänger 71 mit einem Schalter 77 die Stromversorgung 72, die durch eine Batterie oder einen Akkumulator gebildet sein kann, auch für alle anderen Baugruppen der Handtaschensirene ein. Ein Dekoder 73 prüft das Alarmsignal auf Echtheit und schaltet einen Tongenerator 74 ein, welcher einen beispielsweise einer Polizeisirene ähnlichen Alarmton erzeugt, der mittels Verstärker 75 und Lautsprecher 76 an die Umgebung abgegeben wird.

## Patentansprüche

1. Einrichtung zur Abgabe eines Alarms mit einer Senderschaltung und einer Empfängerschaltung, wobei die Senderschaltung in einem als Fingerring ausgebildeten Gehäuse angeordnet ist und einen Auslöseschalter aufweist, der an der Volarseite des Fingerrings angeordnet ist, dadurch gekennzeichnet, daß die Senderschaltung auf einem flexiblen Folienprint (19) angeordnet ist, welcher zu einem Ring schließbar ist, der in das Gehäuse (1) des Fingerrings integrierbar ist.

2. Einrichtung nach Anspruch 1, dadurch gekennzeichnet, daß der Folienprint (19) einen streifenförmigen Abschnitt (20) und einen breiten Abschnitt (21) aufweist, wobei auf dem breiten Abschnitt (21) die Baugruppen und die Bauelemente der Senderschaltung vorgesehen sind.

3. Einrichtung nach Anspruch 2, dadurch gekennzeichnet, daß die Baugruppen und Bauelemente auf dem breiten Abschnitt (21) des Folienprints (19) einen Chip (26) umfassen und entlang dem streifenförmigen Abschnitt (20) wenigstens eine Leiterbahn (22) vorgesehen ist.

4. Einrichtung nach einem der vorstehenden Ansprüche, dadurch gekennzeichnet, daß der streifenförmige Abschnitt (20) zumindest über einen Teil seiner Länge eine größere Dehnbarkeit aufweist und in diesem Teil die Leiterbahn (22) mäanderförmig ausgebildet ist.

5. Einrichtung nach einem der vorstehenden Ansprüche, dadurch gekennzeichnet, daß die Leiterbahn (22) im mittleren Bereich des streifenförmigen Abschnitts als induktiver Näherungsschalter (24) oder als kapazitiver Schalter (Kondensator 30) ausgebildet ist.

6. Einrichtung nach einem der vorstehenden Ansprüche, dadurch gekennzeichnet, daß auf dem breiten Abschnitt (21) des Folienprints (19) eine Batterie oder ein Akkumulator angeordnet ist.

7. Einrichtung nach Anspruch 6, dadurch gekennzeichnet, daß der Akkumulator durch den durch die Leiterbahn (22) des Folienprints (19) gebildeten Schwingkreis (4), der durch einen externen Hochfrequenzgenerator (34) in Schwingung versetzbar ist, aufladbar ist.

8. Einrichtung nach einem der vorstehenden Ansprüche, dadurch gekennzeichnet, daß die Senderschaltung eine Infrarot-Sendediode (11), eine Hochfrequenzspule oder eine Sendeantenne (10) aufweist, um bei Betätigung des Auslöseschalters (3) ein Hochfrequenzsignal auszusenden.

9. Einrichtung nach einem der vorstehenden Ansprüche, dadurch gekennzeichnet, daß das Gehäuse (1) des Fingerrings aus einem zumindest bei Erwärmung plastisch verformbaren Material besteht.

10. Einrichtung nach einem der vorstehenden Ansprüche, dadurch gekennzeichnet, daß an der von dem streifenförmigen Abschnitt (20) abgewandten Seite des breiten Abschnitts (21) des Folienprints (19) eine zum Chip (26) führende Leiterbahn (29) vorgesehen ist und das Ende der Leiterbahn (22) auf dem streifenförmigen Abschnitt (20) beim Schließen des Folienprints (19) zu einem Ring mit der zum Chip (26) führenden Leiterbahn (29) verbindbar ist.

11. Einrichtung nach Anspruch 10, dadurch gekennzeichnet, daß das Leiterbahnende an dem streifenförmigen Abschnitt (20) als flächiges Ablängende (23) ausgebildet ist.

12. Einrichtung nach einem der Ansprüche 1 bis 9, dadurch gekennzeichnet, daß die wenigstens eine Leiterbahn (42) auf dem streifenförmigen Abschnitt (20) vom Auslöseschalter (40) zurück über wenigstens eine weitere Leiterbahn (44) zum Chip (26) zurückführt.

13. Einrichtung nach Anspruch 12, dadurch gekennzeichnet, daß der Folienprint (19) in einem Band angeordnet ist, das einen Klettverschluß (45) aufweist.

14. Einrichtung nach Anspruch 12, dadurch gekennzeichnet, daß der Folienprint (19) in einen Kunststoffband (47) angeordnet ist, das einen Verschluß aufweist.

15. Einrichtung nach einem der vorstehenden Ansprüche, dadurch gekennzeichnet, daß die Empfängerschaltung eine Sirene oder eine an das Telefonnetz anschließbare Informationszentrale aufweist.

16. Einrichtung nach Anspruch 15, dadurch gekennzeichnet, daß die Informationszentrale eine Selbstwähleinrichtung aufweist.

17. Einrichtung nach Anspruch 15 oder 16, dadurch gekennzeichnet, daß die Informationszentrale ein Gerät zum Aufzeichnen und Abspielen eines Notruftextes aufweist.
